# FASCICULE DE BREVET EUROPEEN

(11) **EP 3 334 578 B1**
(45) Date de publication et mention de la délivrance du brevet: **11.12.2019**
(21) Numéro de dépôt: 16763904.6
(22) Date de dépôt: 10.08.2016
(51) Int. Cl.: B29B 11/16, B29C 70/46, B29C 70/22, B29C 70/48, B29L 31/00

(54) **PROCÉDÉ DE FABRICATION D'UN CADRE DE FORME ANNULAIRE**
VERFAHREN ZUR HERSTELLUNG EINES RINGFÖRMIGEN RAHMENS
METHOD FOR MANUFACTURING A RING-SHAPED FRAME

(30) Priorité: 14.08.2015 FR 1570023
(43) Date de publication de la demande: 20.06.2018
(73) Titulaire: Conseil et Technique, 31650 Lauzerville (FR)
(72) Inventeur: VALEMBOIS, Guy, 31650 Lauzerville (FR)
(74) Mandataire: Cabinet Bleger-Rhein-Poupon
(86) Numéro de dépôt international: PCT/FR2016/052060
(87) Numéro de publication internationale: WO 2017/029445

(56) Documents cités:
- US-A1- 2012 100 321
- US-A1- 2015 225 087

## Description

La présente invention concerne le domaine des pièces en matériau composite, comprenant un matériau de renfort à base de fibres, sèches ou pré-imprégnées, dans une matrice de résine synthétique.

La présente invention trouvera son application principalement dans le domaine de la fabrication de cadres annulaires composites, notamment des cadres de hublots destinés à équiper, par exemple, le fuselage des aéronefs, et plus particulièrement des avions, ledit fuselage étant généralement également fabriqué en matériau composite.

Un cadre de hublot d'aéronef présente traditionnellement une forme ronde ou de préférence ovale et ledit cadre n'est pas contenu dans un seul plan, il est incurvé, de telle sorte à ce qu'il puisse s'adapter au mieux à la forme cylindrique du fuselage de l'appareil.

Les cadres de hublots, sur un avion notamment, doivent assurer plusieurs fonctions.

D'une part, ils sont destinés à être fixés au fuselage de l'appareil et permettent eux-mêmes une fixation du hublot via un joint d'étanchéité.

D'autre part, les cadres de hublots doivent présenter d'excellentes caractéristiques, notamment en termes de résistance et de rigidité, et permettre un maintien d'une étanchéité parfaite entre l'intérieur et l'extérieur du fuselage de l'appareil.

De manière secondaire, les cadres de hublots assurent une certaine continuité de surface avec le fuselage de l'aéronef, favorisant ainsi les propriétés aérodynamiques et acoustiques de l'appareil. En outre, les cadres de hublots facilitent le montage de l'élément vitré du hublot.

Par conséquent, dans la fabrication d'un cadre de hublot pour aéronef, il est nécessaire de respecter un certain nombre de contraintes.

Plus particulièrement, des interfaces entre le cadre du hublot et d'autres pièces du fuselage ou de l'appareil doivent être présentes.

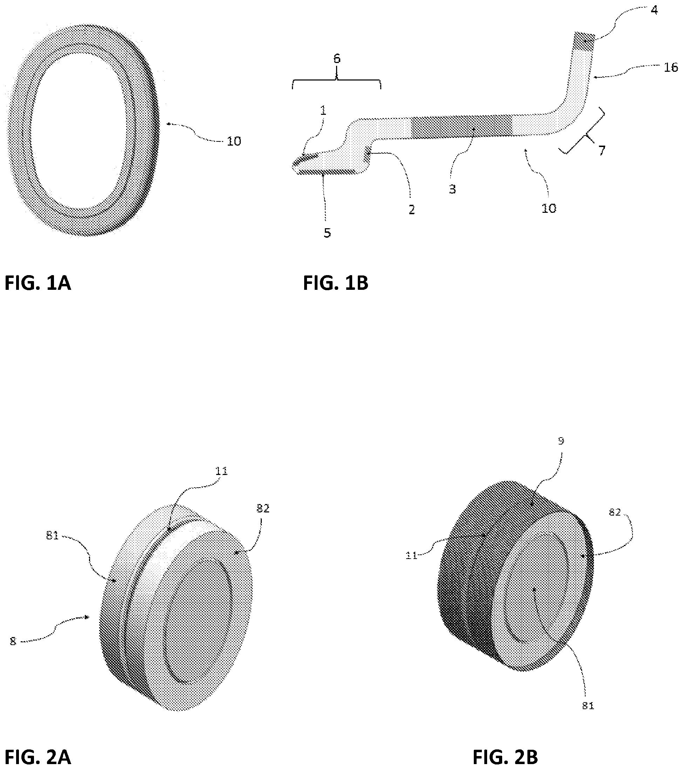

Une vue en perspective d'un exemple de réalisation d'un cadre de hublot 10 est représenté sur la figure 1A. Lesdites interfaces sont représentées en détail, en grisé, sur la figure 1B jointe, illustrant une vue en coupe transversale du cadre de hublot 10, pour une compréhension plus aisée des problématiques qui se posent.

Ainsi, par exemple, la surface intérieure de la zone 1 du cadre de hublot 10 est destinée à coopérer avec le joint du hublot.

Le talon, surface extérieure de la zone 2, doit limiter le volume mort avec le fuselage de l'appareil, et permet également un pré-positionnement du cadre de hublot 10 sur le fuselage de ce dernier.

En ce qui concerne la zone 3, celle-ci reçoit les perçages pour la fixation du cadre de hublot 10 sur le fuselage de l'aéronef.

La surface intérieure de la zone 4, à l'extrémité libre de la jupe cylindrique 16 du cadre 10, est destinée à s'appuyer sur la pièce de serrage du hublot.

Enfin, la surface extérieure de la zone 5 assure la continuité de surface entre le hublot et le fuselage de l'aéronef, afin de garantir les propriétés acoustiques et aérodynamiques de ce dernier.

Pour la fabrication d'un cadre de hublot en matériau composite, on connait des procédés consistant à réaliser plusieurs préformes de manière individuelle. Ces préformes sont ensuite rassemblées et l'ensemble est consolidé dans un moule adapté, par injection de résine et durcissement.

Toutefois, ces procédés présentent un grand nombre d'étapes et peuvent s'avérer complexes à mettre en œuvre. De plus, les zones de jonction entre les différentes préformes sont susceptibles de présenter des faiblesses.

Il est également connu, de la demande internationale de brevet WO 2013/139714, un procédé pour la fabrication d'un cadre de hublot en matériau composite à renfort fibreux.

Le cadre de hublot consiste ici en un profilé dont la section est sensiblement en forme de T et comprend trois ailes s'étendant dans des directions concourantes, définissant une âme et une semelle.

Afin d'obtenir le cadre de hublot, plusieurs étapes sont mises en œuvre. Dans un premier temps, un préforme fibreuse de forme tubulaire, ou chaussette, est réalisée, par un procédé de tressage. On aplatit ensuite la chaussette tubulaire, de sorte à former une bande tubulaire plate, et une pluralité de bandes plates est alors appliquée sur une première face d'un outillage pour constituer l'âme du cadre de hublot.

Selon une première étape de préformage, une portion de certaines bandes est rabattue sur une seconde face d'un outillage. Dans une seconde étape de préformage, une portion d'autres bandes est rabattue sur une troisième face de l'outillage. Ces étapes de préformage sont destinées à permettre la constitution de la semelle du cadre, qui est complétée par une étape de drapage au moyen de plis de renfort.

La préforme fibreuse obtenue est ensuite consolidée, par exemple par injection ou infusion de résine.

Toutefois, le procédé selon ce document comporte plusieurs étapes de préformage et pose également des problèmes de jonction entre les deux extrémités du cadre obtenu après consolidation de la préforme.

On connait également du document US 2012/225087 un procédé de fabrication notamment d'un cadre de fenêtre, une jante de roue, ou une chambre de combustion, qui nécessite un tissage particulier d'une forme tubulaire complexe comprenant plusieurs diamètres le long d'une longueur de celle-ci.

Ce procédé est compliqué à mettre en œuvre et nécessite des préformes tubulaires non standards. Le document US2012100321 A1 décrit un procédé pour la fabrication d'un cadre de forme annulaire.

Le document de brevet WO 2011/041435 décrit la fabrication d'un cadre de hublot pour aéronef présentant une forme en section transversale comprenant d'une part une portion droite du côté extérieur et une portion dite « joggle » et permettant de sceller le cadre de hublot au fuselage de l'aéronef.

Dans ce procédé, la préforme initiale est plate, et comporte des fibres de carbone conventionnelles à une extrémité et des fibres de carbones cassées (« stretch broken carbon fibers ») à une autre extrémité. La préforme est comprimée dans un moule pour donner la forme voulue au cadre final.

Un grand nombre d'étapes sont à mettre en œuvre dans ce procédé, ce qui a pour conséquence de le complexifier. De plus, au moyen de ce procédé, il est particulièrement difficile d'obtenir une pièce présentant une épaisseur constante sur toute la section. Enfin, se posent également ici les problématiques de jonction entre les deux extrémités de la préforme obtenue.

En outre, d'une manière générale, il a été mis en évidence par la demanderesse certaines défaillances au niveau de la structure interne fibreuse des cadres de hublots disponibles dans l'état de la technique.

Plus particulièrement, au niveau de la surface 6, dénommée « zone du joint » du fait de sa proximité avec le joint du hublot, des analyses dans le positionnement des fibres, en microscopie après réalisation d'une coupe transversale du cadre, ont montré un cumul de changement de direction desdites fibres, présentant des angles assez vifs, ainsi que des variations d'épaisseur significatives.

En conséquence, cela rend très hypothétique, d'une part, le bon placement des fibres qui auront tendance à migrer vers l'intérieur des angles et, d'autre part, la mise en pression correcte des fibres par un pressage externe.

En outre, au niveau de la surface 7, ou « zone du coude », se pose un problème de dépliage des fibres.

Cela a tendance à engendrer une diminution substantielle des caractéristiques mécaniques des cadres de hublots, inconvénient auquel il convient impérativement de répondre, au vu des contraintes de sécurité qu'il est nécessaire de remplir pour ce type de pièces.

Aussi, la présente invention se propose de résoudre les problématiques rencontrées classiquement au niveau des cadres de hublot de l'état de la technique en ce qui concerne notamment le positionnement des fibres, et ce afin d'améliorer les caractéristiques mécaniques des cadres de hublot. Le procédé de l'invention permet également de fabriquer un cadre annulaire d'un seul tenant, évitant ainsi tout problème de faiblesse de la pièce au niveau d'une jonction.

Dans ce but, l'invention concerne un procédé pour la fabrication d'un cadre de forme annulaire en matériau composite et comportant au moins les étapes suivantes :
- on enfile au moins une enveloppe tubulaire de fibres sèches sur un ensemble comprenant au moins deux sous-ensembles coaxiaux, mobiles axialement l'un par rapport à l'autre et entre lesquels est définie une gorge périphérique disposée dans le plan général dudit cadre, le plan de symétrie de ladite gorge étant perpendiculaire à ladite enveloppe tubulaire ;
- on force une portion de l'enveloppe tubulaire dans ladite gorge ménagée entre les deux sous-ensembles et on serre lesdits deux sous-ensembles en sorte de maintenir ladite portion de l'enveloppe tubulaire dans ladite gorge ;
- on accole les deux parties de l'enveloppe qui sont extérieures à la gorge, et on rabat l'accolement obtenu sur l'un des deux sous-ensembles pour obtenir une préforme de fibres sèches ;
- on solidifie ladite préforme par pulvérisation de résine ou par injection de résine puis application de conditions particulières de température et de pression permettant la polymérisation de ladite résine.

L'invention concerne en outre un procédé pour la fabrication d'un cadre de forme annulaire en matériau composite qui comporte au moins les étapes suivantes :
- on enfile au moins une enveloppe tubulaire de fibres pré-imprégnées d'une résine sur un ensemble comprenant au moins deux sous-ensembles coaxiaux, mobiles axialement l'un par rapport à l'autre et entre lesquels est définie une gorge périphérique disposée dans le plan général dudit cadre, le plan de symétrie de ladite gorge étant perpendiculaire à ladite enveloppe tubulaire ;
- on force une portion de l'enveloppe tubulaire dans ladite gorge ménagée entre les deux sous-ensembles et on serre lesdits deux sous-ensembles en sorte de maintenir ladite portion de l'enveloppe tubulaire dans ladite gorge ;
- on accole les deux parties de l'enveloppe qui sont extérieures à la gorge, et on rabat l'accolement obtenu sur l'un des deux sous-ensembles pour obtenir une préforme de fibres pré-imprégnées ;
- on solidifie ladite préforme par application de conditions particulières de température et de pression permettant la polymérisation de ladite résine.

Selon une variante du procédé selon l'invention, la phase d'accolement des deux parties de l'enveloppe qui sont extérieures à la gorge, est remplacée par une phase où on redresse, dans le prolongement dudit plan de symétrie de la gorge, l'une desdites deux parties de l'enveloppe, et on accole auxdites parties qui font entre elles un angle, une bande de matériau de fibres sèche ou pré-imprégnées d'une résine.

De manière avantageuse, le fond de la gorge présente une courbe similaire au bord intérieur dudit cadre à fabriquer.

Selon une autre particularité de l'invention, ledit ensemble est constitué par un mandrin et un contre-mandrin.

Selon une autre particularité de l'invention, on force l'enveloppe dans la gorge au moyen d'un élément filaire conformé en une boucle et serré dans ladite gorge jusqu'à repousser ladite enveloppe contre le fond.

De manière intéressante, on superpose plusieurs enveloppes tubulaires sur ledit ensemble.

La présente invention comporte de nombreux avantages. D'une part, le procédé décrit est simple, efficace et particulièrement économique. Il permet l'obtention d'un cadre d'épaisseur quasi-constante sur toute sa section en réalisant une seule préforme de base, à moindre coût. En outre, l'épaisseur du cadre peut être aisément contrôlée au moyen de la superposition, si nécessaire, d'une pluralité d'enveloppes tubulaires de fibres sèches ou pré-imprégnées. D'autre part, le procédé de l'invention est tout à fait compatible avec un procédé de rotomoulage pour l'injection de résine liquide.

Le procédé de l'invention garantit également la fabrication de pièces aux caractéristiques mécaniques particulièrement intéressantes, notamment en termes de résistance et de rigidité, du fait de la conservation d'une orientation de fibres, ou d'une superposition d'orientations de fibres.

Un autre avantage réside dans le fait que, au moyen de ce procédé, le bord intérieur de la préforme est réalisé sans découpe des fibres, améliorant ainsi la qualité de la lèvre d'étanchéité faisant jonction entre le cadre de hublot et le joint du hublot.

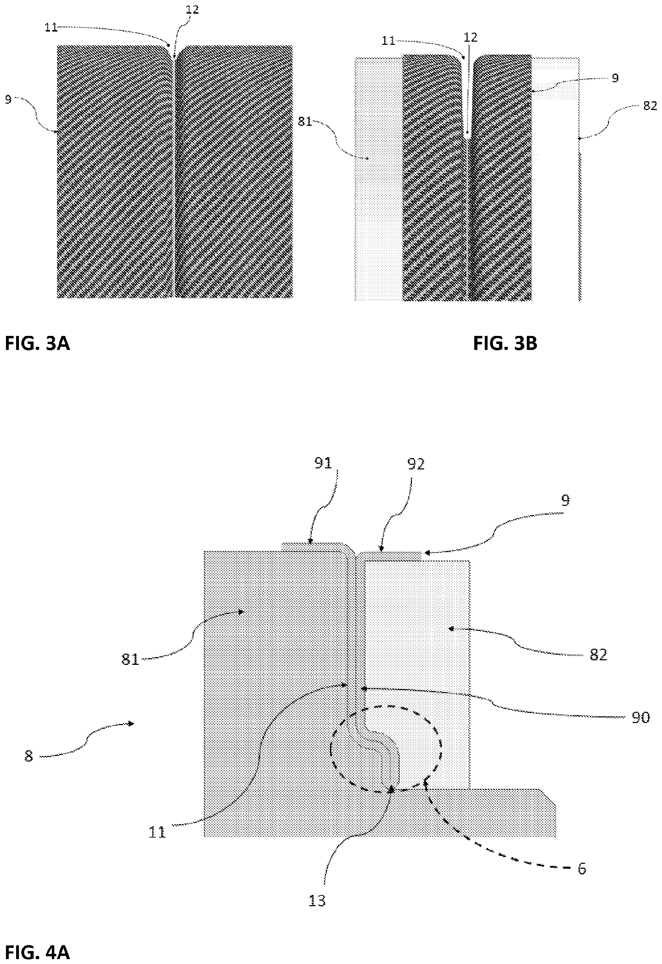

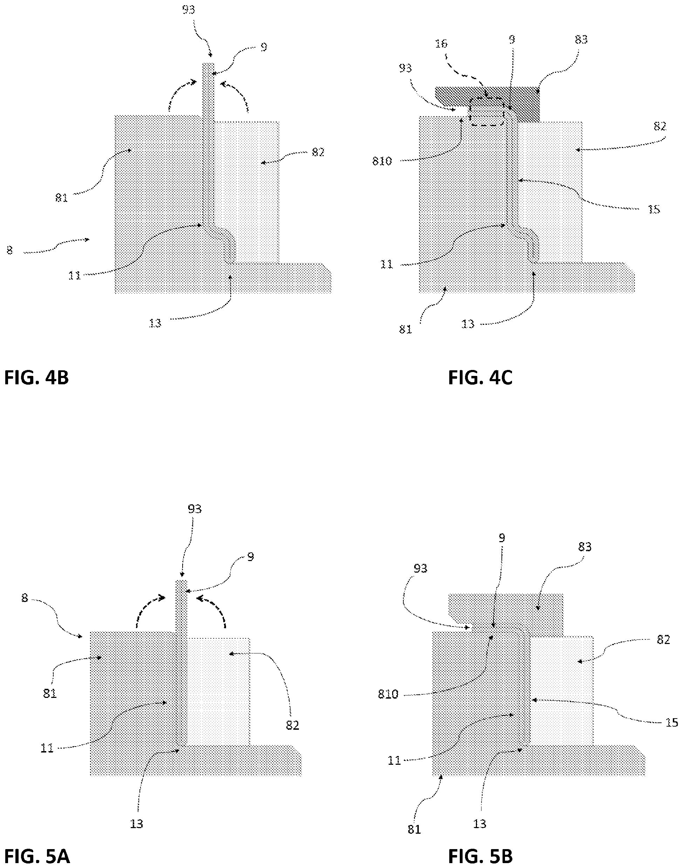

D'autres caractéristiques et avantages de l'invention ressortiront de la description détaillée qui va suivre des modes de réalisation non limitatifs de l'invention, en référence aux figures annexées dans lesquelles :
- la figure 1A illustre schématiquement une vue en perspective d'un cadre de hublot annulaire destiné à équiper un aéronef et la figure 1B représente une vue en coupe transversale dudit cadre, mettant en évidence les différentes interfaces entre ce cadre et d'autres éléments de l'appareil ;
- les figures 2 et suivantes illustrent, de manière schématique, un mode de réalisation préférentiel des différentes étapes mises en œuvre au cours du procédé de l'invention, et notamment :
   ∘ la mise en place des deux sous-ensembles en un ensemble, définissant une gorge entre lesdits deux sous-ensembles, et l'enfilage d'une enveloppe tubulaire de fibres tressées sur ledit ensemble, respectivement sur les figures 2A et 2B ;
   ∘ le positionnement d'un moyen de serrage pour forcer une portion de ladite enveloppe tubulaire dans la gorge et la migration symétrique d'une portion de l'enveloppe vers le fond de la gorge par application d'une traction sur le moyen de serrage, sur les figures 3A et 3B ;
   ∘ une vue en coupe transversale de la portion de l'enveloppe tubulaire remplissant la gorge de l'ensemble, le fond de ladite gorge présentant une courbe similaire à la courbe de l'intérieur du cadre à réaliser, sur la figure 4A, l'accolement des deux parties de l'enveloppe tubulaire qui ne sont pas dans la gorge, sur la figure 4B et le rabattement de celles-ci, au moyen d'un outillage, sur l'une des faces de l'un des sous-ensembles composant l'ensemble, illustré sur la figure 4C ;

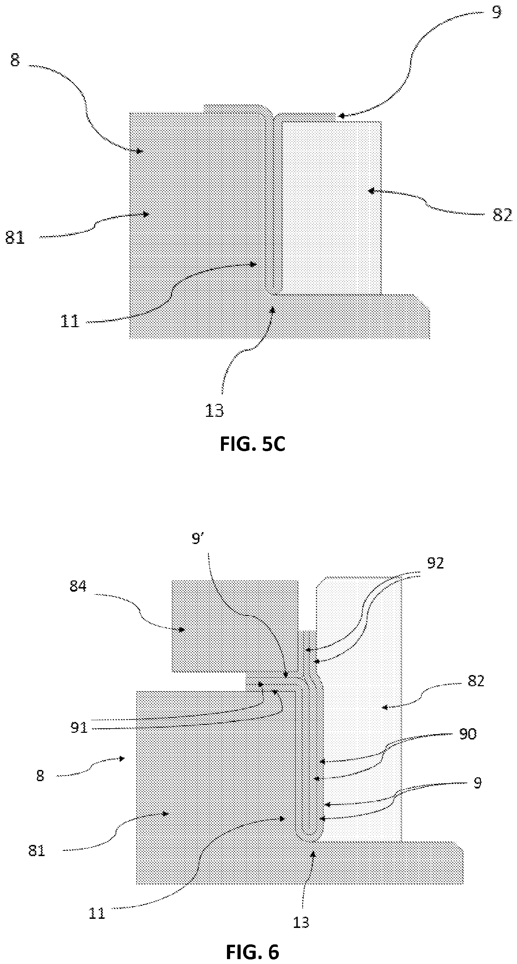

- les figures 5A, 5B et 5C illustrent un mode de réalisation différent dans lequel le fond de la gorge est rectiligne et ne présente pas de courbure particulière, permettant la fabrication d'un cadre de section différente.
- la figure 6 illustre un autre mode de réalisation d'un cadre selon l'invention.

La présente invention concerne un procédé permettant la fabrication d'un cadre 10, de forme annulaire, sensiblement ronde ou préférentiellement ovale, en matériau composite, ledit cadre 10 étant illustré sur la figure 1.

Préférentiellement, le cadre annulaire 10 obtenu par la mise en œuvre des différentes étapes du présent procédé est destiné à équiper le fuselage d'engins aéronefs, plus préférentiellement encore le fuselage d'avions, ledit fuselage pouvant avantageusement être lui-même réalisé en matériau composite.

En référence aux figures 2A et 2B, dans une première étape du procédé, on enfile au moins une enveloppe tubulaire 9 de fibres, de type chaussette, sur un ensemble 8, ce dernier ayant de préférence une forme globalement cylindrique et comprenant au moins deux sous-ensemble 81, 82.

Ladite enveloppe tubulaire 9 est avantageusement constituée de fibres tressées, par exemple en verre, en polyamide ou encore plus préférentiellement en carbone, sèches ou pré-imprégnées d'une résine polymère.

Les enveloppes tubulaires 9 en tresses carbone sont particulièrement avantageuses, du fait que lesdites tresses présentent une déformabilité maîtrisable.

En outre, de nombreux diamètres différents sont disponibles dans le commerce, selon le périmètre du cadre annulaire 10 que l'on souhaite fabriquer.

Dans un mode de réalisation intéressant, non représenté sur les figures, il est envisageable qu'on enfile, sur l'ensemble 8, plusieurs enveloppes tubulaires 9 superposées, comme cela est visible sur la figure 6.

Cela permet, de façon avantageuse, de choisir l'épaisseur de la section du cadre 10 à fabriquer selon les contraintes imposées. En outre, il est également envisageable d'empiler plusieurs enveloppes tubulaires 9 tressées présentant chacune une orientation particulière et complémentaire des fibres.

L'orientation des fibres au sein de l'enveloppe tubulaire 9 dépend, d'une part, du périmètre de la forme sur laquelle est contrainte ladite enveloppe 9, en l'occurrence le périmètre de l'ensemble 8, et, d'autre part, du diamètre des enveloppes 9.

Par conséquent, un choix judicieux d'enveloppes 9 de diamètres différents permet d'avoir des orientations de fibres différentes et complémentaires pour obtenir un ensemble homogène quasi-isométrique.

Dans un mode de réalisation préférentiel, préalablement à la mise en place d'au moins une enveloppe tubulaire de fibres 9 sur l'ensemble 8, on procède à un découpage de ladite enveloppe 9, afin que celle-ci présente la longueur adéquate à la fabrication du cadre annulaire 10.

Lesdits deux sous-ensembles 81, 82, sur lesquels est enfilée au moins l'enveloppe tubulaire 9, et constituant l'ensemble 8, sont mobiles l'un par rapport à l'autre. Généralement, l'un des deux sous-ensembles 82 est guidé par rapport au second sous-ensemble 81 qui, lui, reste fixe.

Dans un exemple de réalisation intéressant, qui est celui représenté sur les figures, lesdits deux sous-ensembles consistent en un mandrin 81 et un contre-mandrin 82, ce dernier étant guidé sur ledit mandrin 81, et l'enveloppe tubulaire 9 est montée sur la surface externe des mandrins 81, 82.

On comprend que la forme générale de l'ensemble 8 doit correspondre à la forme du cadre de hublot annulaire 10 que l'on souhaite fabriquer au moyen du présent procédé.

Entre les deux sous-ensembles 81, 82, de préférence un mandrin 81 et un contre-mandrin 82, est définie une gorge périphérique 11, qui est dans le plan général du cadre annulaire 10, et dont le plan de symétrie est perpendiculaire à ladite enveloppe tubulaire 9 lorsque cette dernière est enfilée sur l'ensemble 8.

En référence maintenant aux figures 3A et 3B, l'étape suivante consiste à forcer une portion 90 de l'enveloppe tubulaire de fibres 9 à migrer à l'intérieur de la gorge 11.

Tout préférentiellement cette étape est réalisée par l'intermédiaire d'un moyen de resserrement 12 pouvant consister en un lien de type fil de pêche notamment.

Ledit moyen de resserrement 12 est, de manière avantageuse, positionné de manière circonférentielle, à l'extérieur de l'enveloppe tubulaire 9 et sensiblement dans le plan de symétrie de la gorge périphérique 11.

En référence aux figures 3B et 4B, l'application d'une traction sur le moyen de resserrement 12 entraine une migration de la portion 90 de l'enveloppe tubulaire 9 vers le fond 13 de ladite gorge 11, et ce de manière symétrique par rapport au plan de symétrie de ladite gorge 11.

De manière particulièrement avantageuse, le fond 13 de la gorge 11 définie entre les sous-ensembles 81, 82, présente une forme, ou courbe, similaire à celle du cadre 10 à réaliser.

Ainsi, dans le mode de réalisation représenté sur les figures 4A à 4C, ledit fond 13 de la gorge 11 a une forme en section correspondante à celle de la forme en section de la zone de joint 6 du cadre de hublot 10. Cet exemple est illustré plus particulièrement sur la figure 4A au moyen du cercle et de la flèche en traits discontinus.

On vient ensuite serrer les deux sous-ensembles 81, 82, par exemple le mandrin 81 et le contre-mandrin 82, de sorte à permettre le maintien de la portion 90 de l'enveloppe de fibres 9 dans la gorge 9.

Plus précisément, on applique, dans un premier temps, un léger serrage du contre-mandrin 82 sur le mandrin 81 au cours de la migration de l'enveloppe tubulaire 9 dans la gorge 11, en sorte de maintenir une pression sur la partie de l'enveloppe 11 qui se trouve déjà dans ladite gorge 11. L'application de cette pression s'oppose légèrement au déplacement de l'enveloppe 9 et permet de maintenir de la tension dans les fibres de ladite enveloppe 9 pendant leur mise en forme, afin d'éviter tout plissement de celles-ci.

A la fin de l'opération, lorsque l'enveloppe tubulaire 9 a atteint le fond 13 de la gorge 11, la pression entre le mandrin 81 et le contre-mandrin 82 est augmentée, de sorte à bloquer l'enveloppe tubulaire 9 dans son état final, puis le moyen de resserrement 12 est enlevé, par exemple par application d'une simple traction à l'une de ses deux extrémités lorsque ledit moyen 12 consiste en un lien type fil.

A ce moment-là du procédé, une portion 90 de l'enveloppe tubulaire 9 se trouve piégée au sein de la gorge 11, jusque dans le fond 13 de celle-ci, tandis qu'une partie de ladite enveloppe 9 est restée extérieure à ladite gorge 11, comme représenté sur la figure 4A.

De manière plus précise, on retrouve deux parties 91, 92 de l'enveloppe 9, chacune desdites deux parties 91, 92, qui consistent en les bords extrêmes de l'enveloppe tubulaire, s'étendant de part et d'autre de ladite gorge 11, et de manière globalement symétrique de chaque côté de celle-ci.

Lesdites deux parties 91, 92 de l'enveloppe 9 sont alors rassemblées, sensiblement dans le plan de symétrie de la gorge 11, en un accolement 93. Cette étape est plus spécifiquement représentée sur la figure 4B.

En référence à présent à la figure 4C, on rabat ensuite ledit accolement 93 obtenu sur l'un des deux sous-ensembles 81, 82 afin de former la jupe cylindrique 16 du cadre de hublot 10. En l'occurrence, sur l'exemple de réalisation représenté, l'accolement 93 est ramené sur la surface externe 810 du mandrin 81.

Préférentiellement, on rabat l'accolement 93 au moyen d'un outillage 83 présentant une forme adéquate à la conformation de l'enveloppe 9 sous forme d'une jupe cylindrique 16 et on aboutit ainsi la préforme 15 permettant l'obtention du cadre annulaire de hublot 10.

Afin de finaliser la fabrication dudit cadre 10, ladite préforme 15 est solidifiée.

Dans le cas de figure où la préforme 15 comporte au moins une enveloppe tubulaire 9 de fibres tressées pré-imprégnées d'une résine polymère, la solidification de ladite préforme 15 est effectuée par une simple mise en conditions de température et de pression permettant la polymérisation de ladite résine.

Dans l'exemple de réalisation où la préforme 15 est constituée de fibres sèches, on solidifie cette dernière par pulvérisation ou par injection de résine polymère, puis applications de conditions adéquates de température et de pression pour permettre à ladite résine de polymériser.

Il est envisageable de pulvériser, sur la surface extérieure de l'enveloppe tubulaire 9, un spray de résine époxy, par exemple, une fois que ladite enveloppe 9 est enfilée sur l'ensemble mandrin 81 et contre-mandrin 82, avant la mise en œuvre des étapes de conformation de ladite enveloppe 9.

Cette opération de pulvérisation préalable permet avantageusement de donner à la préforme 15 finalement obtenue, la tenue mécanique facilitant sa manipulation, notamment au moment du démontage des mandrins 81 et 82, des opérations de découpe si nécessaire, ou encore lors de la mise en moule de ladite préforme 15.

En effet, l'étape de solidification de la préforme 15 peut être réalisée selon un process de type moulage par injection à basse pression de résine liquide dans un moule.

D'ailleurs, de manière particulièrement avantageuse, il est envisageable de réaliser la préforme 15 directement dans un moule, de sorte à pouvoir automatiser la fabrication des cadres composites 10.

La présente invention a été décrite plus particulièrement dans un mode de réalisation préférentiel, pour la fabrication de cadres de hublot 10 annulaires destinés à équiper des aéronefs, notamment des avions.

Toutefois, le procédé décrit ici ne doit pas être compris comme étant limité à la fabrication de cadres de hublots, et il définit également, de manière plus générale, un nouveau mode de réalisation particulièrement intéressant pour l'obtention, non limitativement, de cadres ayant une forme générale annulaire et fabriqué à base de matériau composite.

A cet effet, les figures 5A à 5C illustrent la fabrication d'un cadre annulaire de section simplifiée par rapport aux cadres destinés à équiper les aéronefs, sans la conformation particulière de la « zone de joint » 6 avec toutes les interfaces imposées.

Dans ce mode de réalisation, le fond 13 de la gorge 11 est rectiligne, tout comme le reste de ladite gorge 11.

Le procédé selon l'invention est particulièrement intéressant, car il permet de fabriquer un cadre annulaire 10 en un nombre limité d'opérations, et sans problématiques de jonction entre plusieurs préformes, ou entre les deux extrémités d'une seule et même préforme, étant donné qu'on utilise une enveloppe tubulaire 9 continue de fibres, ladite enveloppe 9 étant mise en forme sur un ensemble mandrin et contre-mandrin de forme globalement cylindrique.

En référence maintenant à la figure 6, on peut voir la mise en œuvre du procédé selon l'invention pour la fabrication d'un cadre présentant une section différente, et notamment conforme à celle du cadre objet du document WO 2013/139714 à savoir en forme de T.

Cette forme est obtenue en ne rassemblant et n'accolant pas les deux parties 91, 92 de l'enveloppe 9, après forçage de celle-ci dans la gorge 11, mais en ne redressant qu'une partie, en l'occurrence la partie 92, en sorte qu'elle fasse un angle avec l'autre partie, en l'occurrence la partie 91, tandis que d'une part une bande 9' de matériau de renfort à base de fibres, sèches ou pré-imprégnées, dans une matrice de résine synthétique est accolée auxdites parties 91 et 92, et que d'autre part un outillage 83 vient presser la bande 9' contre simultanément les parties 91 et 92. La partie 91 et la partie de bande 9' qui lui est accolée constituent ainsi une nervure périphérique qui fait saille du reste du cadre.

De manière avantageuse, la bande 9' consiste en une enveloppe tubulaire, enfilée sur le mandrin 81 et la partie 91, et redressée pour moitié contre la partie 92. Le procédé selon l'invention permet ainsi de fabriquer un cadre de section en T, sans zone de jonction.

Il est à noter, comme cela a déjà été évoqué, que sur cette figure 6 l'enveloppe 9 est doublée d'une seconde enveloppe 9, en sorte d'accroître d'autant l'épaisseur du cadre. Il est bien entendu possible de superposer plus de deux enveloppes 9.

## Revendications

1. Procédé pour la fabrication d'un cadre (10) de forme annulaire en matériau composite comportant au moins les étapes suivantes :
- on enfile au moins une enveloppe tubulaire de fibres sèches (9) sur un ensemble (8) comprenant au moins deux sous-ensembles (81, 82) coaxiaux, mobiles axialement l'un par rapport à l'autre et entre lesquels est définie une gorge périphérique (11) disposée dans le plan général dudit cadre (10), le plan de symétrie de ladite gorge (11) étant perpendiculaire à ladite enveloppe tubulaire (9) ;
- on force une portion (90) de l'enveloppe tubulaire (9) dans ladite gorge (11) ménagée entre les deux sous-ensembles (81, 82) et on serre lesdits deux sous-ensembles (81, 82) en sorte de maintenir ladite portion (90) de l'enveloppe tubulaire (9) dans ladite gorge (11) ;
- on accole les deux parties (91, 92) de l'enveloppe (9) qui sont extérieures à la gorge (11), et on rabat l'accolement (93) obtenu sur l'un des deux sous-ensembles (81, 82) pour obtenir une préforme (15) de fibres sèches ;
- on solidifie ladite préforme (15) par pulvérisation de résine ou par injection de résine puis application de conditions particulières de température et de pression permettant la polymérisation de ladite résine.

2. Procédé pour la fabrication d'un cadre (10) de forme annulaire en matériau composite comportant au moins les étapes suivantes :
- on enfile au moins une enveloppe tubulaire de fibres pré-imprégnées (9) d'une résine sur un ensemble (8) comprenant au moins deux sous-ensembles (81, 82) coaxiaux, mobiles axialement l'un par rapport à l'autre et entre lesquels est définie une gorge périphérique (11) disposée dans le plan général dudit cadre (10), le plan de symétrie de ladite gorge (11) étant perpendiculaire à ladite enveloppe tubulaire (9) ;
- on force une portion (90) de l'enveloppe tubulaire (9) dans ladite gorge (11) ménagée entre les deux sous-ensembles (81, 82) et on serre lesdits deux sous-ensembles (81, 82) en sorte de maintenir ladite portion (90) de l'enveloppe tubulaire (9) dans ladite gorge (11) ;
- on accole les deux parties (91, 92) de l'enveloppe (9) qui sont extérieures à la gorge (11), et on rabat l'accolement (93) obtenu sur l'un des deux sous-ensembles (81, 82) pour obtenir une préforme (15) de fibres pré-imprégnées ;
- on solidifie ladite préforme (15) par application de conditions particulières de température et de pression permettant la polymérisation de ladite résine.

3. Procédé pour la fabrication d'un cadre (10) de forme annulaire en matériau composite comportant au moins les étapes suivantes :
- on enfile au moins une enveloppe tubulaire de fibres sèches (9) sur un ensemble (8) comprenant au moins deux sous-ensembles (81, 82) coaxiaux, mobiles axialement l'un par rapport à l'autre et entre lesquels est définie une gorge périphérique (11) disposée dans le plan général dudit cadre (10), le plan de symétrie de ladite gorge (11) étant perpendiculaire à ladite enveloppe tubulaire (9) ;
- on force une portion (90) de l'enveloppe tubulaire (9) dans ladite gorge (11) ménagée entre les deux sous-ensembles (81, 82) et on serre lesdits deux sous-ensembles (81, 82) en sorte de maintenir ladite portion (90) de l'enveloppe tubulaire (9) dans ladite gorge (11) ;
- on redresse, dans le prolongement dudit plan de symétrie de la gorge, l'une des deux parties (91, 92) de l'enveloppe (9) qui sont extérieures à la gorge (11), et on accole auxdites parties qui font entre elles un angle, une bande (9') de matériau de fibres sèches;
- on solidifie ladite préforme (15) par pulvérisation de résine ou par injection de résine puis application de conditions particulières de température et de pression permettant la polymérisation de ladite résine.

4. Procédé pour la fabrication d'un cadre (10) de forme annulaire en matériau composite comportant au moins les étapes suivantes :
- on enfile au moins une enveloppe tubulaire de fibres pré-imprégnées (9) d'une résine sur un ensemble (8) comprenant au moins deux sous-ensembles (81, 82) coaxiaux, mobiles axialement l'un par rapport à l'autre et entre lesquels est définie une gorge périphérique (11) disposée dans le plan général dudit cadre (10), le plan de symétrie de ladite gorge (11) étant perpendiculaire à ladite enveloppe tubulaire (9) ;
- on force une portion (90) de l'enveloppe tubulaire (9) dans ladite gorge (11) ménagée entre les deux sous-ensembles (81, 82) et on serre lesdits deux sous-ensembles (81, 82) en sorte de maintenir ladite portion (90) de l'enveloppe tubulaire (9) dans ladite gorge (11) ;
- on redresse, dans le prolongement dudit plan de symétrie de la gorge, l'une des deux parties (91, 92) de l'enveloppe (9) qui sont extérieures à la gorge (11), et on accole auxdites parties qui font entre elles un angle, une bande (9') de matériau de fibres pré-imprégnées (9) d'une résine;
- on solidifie ladite préforme (15) par application de conditions particulières de température et de pression permettant la polymérisation de ladite résine.

5. Procédé pour la fabrication d'un cadre (10) selon l'une quelconque des revendications 3 ou 4, dans lequel la bande de matériau consiste en une enveloppe tubulaire (9').

6. Procédé pour la fabrication d'un cadre (10) selon l'une quelconque des revendications précédentes dans lequel le fond (13) de la gorge (11) présente une courbe similaire à celle du bord intérieur dudit cadre (10) à fabriquer.

7. Procédé pour la fabrication d'un cadre (10) selon l'une quelconque des revendications précédentes dans lequel ledit ensemble (8) est constitué par un mandrin (81) et un contre-mandrin (82).

8. Procédé pour la fabrication d'un cadre (10) selon l'une quelconque des revendications précédentes, dans lequel on force l'enveloppe dans la gorge au moyen d'un élément filaire conformé en une boucle et serré dans ladite gorge jusqu'à repousser ladite enveloppe contre le fond.

9. Procédé pour la fabrication d'un cadre (10) selon l'une quelconque des revendications précédentes dans lequel on superpose plusieurs enveloppes tubulaires (9) sur ledit ensemble (8).

## Patentansprüche

1. Verfahren zur Herstellung eines ringförmigen Rahmens (10) aus Verbundmaterial, umfassend wenigstens die nachfolgenden Schritte :
- mindestens eine rohrförmige Hülle aus trockenen Fasern (9) wird auf einen Bausatz (8) aufgesteckt, der mindestens zwei axial zu einander bewegliche koaxiale Bauteile (81, 82) umfasst, zwischen denen eine in der allgemeinen Ebene des besagten Rahmens (10) angeordnete umlaufende Nut (11) definiert ist, wobei die Symmetrieebene der besagten Nut (11) senkrecht zu der rohrförmigen Hülle (9) ist ;
- ein Teil (90) der rohrförmigen Hülle (9) wird in die besagte zwischen den zwei Bauteilen (81, 82) vorgesehene Nut (11) gedrückt, und die besagten zwei Bauteile (81, 82) werden so festgeklemmt, dass der besagte Teil (90) der rohrförmigen Hülle (9) in der Nut (11) gehalten wird ;
- die beiden Teile (91, 92) der Hülle (9), die außerhalb der Nut (11) liegen, werden zusammengefügt und die erhaltene Zusammenfügung (93) wird auf einer der beiden Bauteile (81, 82) umgeklappt, um einen Vorformling (15) aus trockenen Fasern zu erhalten ;
- der Vorformling (15) wird durch Harzsprühen oder durch Harzinjektion, anschließend durch Anwendung von besonderen Temperatur- und Druckbedingungen verfestigt, die die Polymerisation des besagten Harzes ermöglichen.

2. Verfahren zur Herstellung eines ringförmigen Rahmens (10) aus Verbundmaterial, umfassend wenigstens die nachfolgenden Schritte :
- mindestens eine rohrförmige Hülle aus mit Harz vorimprägnierten Fasern (9) wird auf einen Bausatz (8) aufgesteckt, der mindestens zwei axial zu einander bewegliche koaxiale Bauteile (81, 82) umfasst, zwischen denen eine in der allgemeinen Ebene des besagten Rahmens (10) angeordnete umlaufende Nut (11) definiert ist, wobei die Symmetrieebene der besagten Nut (11) senkrecht zu der rohrförmigen Hülle (9) ist ;
- ein Teil (90) der rohrförmigen Hülle (9) wird in die besagte zwischen den zwei Bauteilen (81, 82) vorgesehene Nut (11) gedrückt, und die besagten zwei Bauteile (81, 82) werden so festgeklemmt, dass der besagte Teil (90) der rohrförmigen Hülle (9) in der Nut (11) gehalten wird ;
- die beiden Teile (91, 92) der Hülle (9), die außerhalb der Nut (11) liegen, werden zusammengefügt und die erhaltene Zusammenfügung (93) wird auf einer der beiden Bauteile (81, 82) umgeklappt, um einen Vorformling (15) aus vorimprägnierten Fasern zu erhalten ;
- der Vorformling (15) wird durch Anwendung von besonderen Temperatur- und Druckbedingungen verfestigt, die die Polymerisation des besagten Harzes ermöglichen.

3. Verfahren zur Herstellung eines ringförmigen Rahmens (10) aus Verbundmaterial, umfassend wenigstens die nachfolgenden Schritte :
- mindestens eine rohrförmige Hülle aus trockenen Fasern (9) wird auf einen Bausatz (8) aufgesteckt, der mindestens zwei axial zu einander bewegliche koaxiale Bauteile (81, 82) umfasst, zwischen denen eine in der allgemeinen Ebene des besagten Rahmens (10) angeordnete umlaufende Nut (11) definiert ist, wobei die Symmetrieebene der besagten Nut (11) senkrecht zu der rohrförmigen Hülle (9) ist ;
- ein Teil (90) der rohrförmigen Hülle (9) wird in die besagte zwischen den zwei Bauteilen (81, 82) vorgesehene Nut (11) gedrückt, und die besagten zwei Bauteile (81, 82) werden so festgeklemmt, dass der besagte Teil (90) der rohrförmigen Hülle (9) in der Nut (11) gehalten wird ;
- einer der beiden Teile (91, 92) der Hülle (9), die außerhalb der Nut (11) liegen, wird in der Verlängerung der besagten Symmetrieebene der Nut wieder aufgeklappt, und mit den besagten Teilen, die zwischen ihnen einen Winkel bilden, wird ein Streifen (9') aus trockenem Fasermaterial zusammengefügt ;
- der Vorformling (15) wird durch Harzsprühen oder durch Harzinjektion, anschließend durch Anwendung von besonderen Temperatur- und Druckbedingungen verfestigt, die die Polymerisation des besagten Harzes ermöglichen.

4. Verfahren zur Herstellung eines ringförmigen Rahmens (10) aus Verbundmaterial, umfassend wenigstens die nachfolgenden Schritte :
- mindestens eine rohrförmige Hülle aus mit Harz vorimprägnierten Fasern (9) wird auf einen Bausatz (8) aufgesteckt, der mindestens zwei axial zu einander bewegliche koaxiale Bauteile (81, 82) umfasst, zwischen denen eine in der allgemeinen Ebene des besagten Rahmens (10) angeordnete umlaufende Nut (11) definiert ist, wobei die Symmetrieebene der besagten Nut (11) senkrecht zu der rohrförmigen Hülle (9) ist ;
- ein Teil (90) der rohrförmigen Hülle (9) wird in die besagte zwischen den zwei Bauteilen (81, 82) vorgesehene Nut (11) gedrückt, und die besagten zwei Bauteile (81, 82) werden so festgeklemmt, dass der besagte Teil (90) der rohrförmigen Hülle (9) in der Nut (11) gehalten wird ;
- einer der beiden Teile (91, 92) der Hülle (9), die außerhalb der Nut (11) liegen, wird in der Verlängerung der besagten Symmetrieebene der Nut wieder aufgeklappt, und mit den besagten Teilen, die zwischen ihnen einen Winkel bilden, wird ein Streifen (9') aus mit Harz vorimprägniertem Fasermaterial zusammengefügt;
- der Vorformling (15) wird durch Anwendung von besonderen Temperatur- und Druckbedingungen verfestigt, die die Polymerisation des besagten Harzes ermöglichen.

5. Verfahren zur Herstellung eines Rahmens (10) nach irgendeinem der Ansprüche 3 oder 4, bei dem der Materialstreifen aus einer rohrförmigen Hülle (9') besteht.

6. Verfahren zur Herstellung eines Rahmens (10) nach irgendeinem der vorgehenden Ansprüche, bei dem der Boden (13) der Nut (11) eine Krümmung aufweist, die derjenigen des Innenrandes des besagten herzustellenden Rahmens (10) ähnlich ist.

7. Verfahren zur Herstellung eines Rahmens (10) nach irgendeinem der vorgehenden Ansprüche, bei dem der besagte Satz (8) aus einem Spannkopf (81) und einem Gegenspannkopf (82) besteht.

8. Verfahren zur Herstellung eines Rahmens (10) nach irgendeinem der vorgehenden Ansprüche, bei dem die Hülle mittels eines zu einer Schlaufe geformten und in der besagten Nut festgeklemmten Drahtelements in die besagte Nut gedrückt wird, bis die besagte Hülle gegen den Boden gedrückt wird.

9. Verfahren zur Herstellung eines Rahmens (10) nach irgendeinem der vorgehenden Ansprüche, bei dem mehrere rohrförmigen Hüllen (9) über einander auf dem besagten Bausatz (8) angebracht werden.

## Claims

1. A method for manufacturing a ring-shaped frame (10) made from composite material, comprising at least the following steps:
- slipping at least one tubular casing of dry fibers (9) over an assembly (8) comprising at least two coaxial subassemblies (81, 82) that are axially movable relative to one another and between which a peripheral groove (11) is defined, disposed in the general plane of said frame (10), the plane of symmetry of said groove (11) being perpendicular to said tubular casing (9);
- forcing a portion (90) of the tubular casing (9) into said groove (11) provided between the two subassemblies (81, 82) and tightening said two subassemblies (81, 82) so as to hold said portion (90) of the tubular casing in said groove (11);
- coupling the two parts (91, 92) of the casing (9) that are outside the groove (11), and folding the obtained coupling (93) onto one of the two subassemblies (81, 82) to obtain a preform (15) of dry fibers;
- solidifying said preform (15) by spraying resin or injecting resin, then applying special temperature and pressure conditions allowing polymerization of said resin.

2. A method for manufacturing a ring-shaped frame (10) made from composite material, comprising at least the following steps:
- slipping at least one tubular casing of fibers (9) pre-impregnated with a resin over an assembly (8) comprising at least two coaxial subassemblies (81, 82) that are axially movable relative to one another and between which a peripheral groove (11) is defined, disposed in the general plane of said frame (10), the plane of symmetry of said groove (11) being perpendicular to said tubular casing (9);
- forcing a portion (90) of the tubular casing (9) into said groove (11) provided between the two subassemblies (81, 82) and tightening said two subassemblies (81, 82) so as to hold said portion (90) of the tubular casing in said groove (11);
- coupling the two parts (91, 92) of the casing (9) that are outside the groove (11), and folding the obtained coupling (93) onto one of the two subassemblies (81, 82) to obtain a preform (15) of pre-impregnated fibers;
- solidifying said preform (15) by applying special temperature and pressure conditions allowing polymerization of said resin.

3. A method for manufacturing a ring-shaped frame (10) made from composite material, comprising at least the following steps:
- slipping at least one tubular casing of dry fibers (9) over an assembly (8) comprising at least two coaxial subassemblies (81, 82) that are axially movable relative to one another and between which a peripheral groove (11) is defined, disposed in the general plane of said frame (10), the plane of symmetry of said groove (11) being perpendicular to said tubular casing (9);
- forcing a portion (90) of the tubular casing (9) into said groove (11) provided between the two subassemblies (81, 82) and tightening said two subassemblies (81, 82) so as to hold said portion (90) of the tubular casing in said groove (11);
- standing up, in the extension of said plane of symmetry of the groove, one of said two parts (91, 92) of the casing (9) that are outside the groove (11), and coupling said parts, which form an angle between them, a strip (9') of material with dry fibers;
- solidifying said preform (15) by spraying resin or injecting resin, then applying special temperature and pressure conditions allowing polymerization of said resin.

4. A method for manufacturing a ring-shaped frame (10) made from composite material, comprising at least the following steps:
- slipping at least one tubular casing of fibers (9) pre-impregnated with a resin over an assembly (8) comprising at least two coaxial subassemblies (81, 82) that are axially movable relative to one another and between which a peripheral groove (11) is defined, disposed in the general plane of said frame (10), the plane of symmetry of said groove (11) being perpendicular to said tubular casing (9);
- forcing a portion (90) of the tubular casing (9) into said groove (11) provided between the two subassemblies (81, 82) and tightening said two subassemblies (81, 82) so as to hold said portion (90) of the tubular casing in said groove (11);
- standing up, in the extension of said plane of symmetry of the groove, one of said two parts (91, 92) of the casing (9) that are outside the groove (11), and coupling said parts, which form an angle between them, a strip (9') of material with fibers (9) pre-impregnated with a resin;
- solidifying said preform (15) by applying special temperature and pressure conditions allowing polymerization of said resin.

5. The method for producing a frame (10) according to any one of claims 3 or 4, wherein the strip of material consists of a tubular casing (9').

6. The method for producing a frame (10) according to any one of the preceding claims, wherein the bottom (13) of the groove (11) has a curve similar to that of the inner edge of said frame (10) to be produced.

7. The method for producing a frame (10) according to any one of the preceding claims, wherein said assembly (8) is made up of a mandrel (81) and a counter-mandrel (82).

8. The method for producing a frame (10) according to any one of the preceding claims, wherein the casing is forced into the groove using a wired element configured in a loop and gripped in said groove until it pushes said casing against the bottom.

9. The method for producing a frame (10) according to any one of the preceding claims, wherein several tubular casings (9) are superimposed on said assembly (8).
